# EUROPÄISCHE PATENTSCHRIFT

(11) **EP 0 502 248 B1**
(45) Veröffentlichungstag und Bekanntmachung des Hinweises auf die Patenterteilung: **14.06.1995**
(21) Anmeldenummer: 91119404.1
(22) Anmeldetag: 14.11.1991
(51) Int. Cl.: H01H 35/02, H01H 35/14

(54) **Lageschalter**
Position switch
Interrupteur de position

(30) Priorität: 07.03.1991 DE 4107279
(43) Veröffentlichungstag der Anmeldung: 09.09.1992
(73) Patentinhaber: ELB-Füllstandsgeräte Bundschuh GmbH + Co., D-64625 Bensheim (DE)
(72) Erfinder: Bundschuh, Karl-Hans, W-6140 Bensheim 1 (DE)
(74) Vertreter: Helber, Friedrich G., Dipl.-Ing.

(56) Entgegenhaltungen:
- CH-A- 571 417
- DE-A- 3 435 847
- DE-C- 3 216 321
- FR-A- 2 366 683
- US-A- 4 820 888

## Beschreibung

Die Erfindung betrifft einen Lageschalter mit einem in einem Röhrchen aus unmagnetischem Material zwischen zwei Endstellungen längsbeweglich angeordneten, permanentmagnetischen Schaltkörper, welchem in einem der einen Endstellung des Schaltkörpers zugeordneten ersten Endbereich des Röhrchens ein vorzugsweise als Reed- oder Schutzgas-Kontakt ausgebildeter elektrischer Schalter zugeordnet ist, der bei Annäherung des Schaltkörpers an den ersten Endbereich durch das magnetische Feld des Schaltkörpers geschaltet wird, wobei das Röhrchen im Lageschalter so angeordnet ist, daß eine Änderung der zu überwachenden Lage in eine Neigung des Röhrchens relativ zur Horizontalen umgesetzt wird.

Lageschalter dieser Art dienen zur Ein- bzw. Ausschaltung von elektrischen Aggregaten in Abhängigkeit von der Veränderung der räumlichen Lage eines Tasters, Schwimmers o.dgl. Lage-Aufnehmers in bezug auf eine Sollage. Ein bekannter Lageschalter der eingangs erwähnten Art (DE-PS 34 35 847) ist beispielsweise als Schwimmerschalter ausgebildet, der zur Überwachung des zulässigen Höchst- bzw. Niedrigststandes von Flüssigkeiten in Behältern, Tanks oder Schächten oder auch zur Steuerung des Füllstandsniveaus von Flüssigkeiten in einem bestimmten Niveaubereich bestimmt ist. Bei diesem bekannten Schwimmerschalter ist das den magnetischen Schaltkörper aufnehmende hermetisch geschlossene Führungs-Röhrchen in einem Schwimmerkörper angeordnet, der seinerseits am freien schwingenden Ende eines Schwenkarms gehaltert ist, durch welchen die elektrischen Anschlußleitungen zu dem im Schwimmerkörper vorgesehenen eigentlichen elektrischen Schalter in Form eines Reed- oder Schutzgaskontakts geführt sind. Der den Schwimmerkörper halternde Schwenkarm kann dabei von einem am schwimmkörperabgewandten Ende verschwenkbar gelagerten starren Rohr oder aber auch von einem biegsamen, die zum elektrischen Schalter geführten Leitungen dicht umschließenden Gummi- oder Kunststoff-Kabel gebildet sein. In jedem Falle ist klar, daß durch diese verschwenkbare Führung des Schwimmerkörpers an einem Schwenkarm eine Veränderung der Neigung des den magnetischen Schaltkörper führende Röhrchen eintritt, wenn sich das Niveau der zu überwachenden bzw. zu steuernden Flüssigkeit ändert und der Schwimmkörper dementsprechend aufschwimmt oder absinkt. Der bekannte Schwimmerschalter hat sich durchaus bewährt und findet deshalb in der Praxis auch zunehmend Anwendung.

Aufgrund seines Aufbaus, d.h. der Anordnung des Reed-Kontakts seitlich neben dem Röhrchen in dessen einem Endbereich und aufgrund der zwischen dem Schaltmagneten und der Innenwandung des Röhrchens zwangsläufig auftretenden Reibungswiderstandes unterliegt der bekannte Schwimmerschalter physikalischen Bedingungen, welche die Exaktheit des Schaltpunkts beeinträchtigen. Insbesondere treten unterschiedliche Auslösepunkte in der unteren bzw. der oberen Endstellung in bezug auf den Schaltwinkel, unter welchem der den elektrischen Schalter enthaltende Schwimmkörper relativ zur Horizontalen gegeben sind, auf. Diese unterschiedlichen oberen und unteren Schaltwinkel sind darauf zurückzuführen, daß der magnetische Schaltkörper in der dem Reed-Kontakt benachbarten Schaltstellung nicht nur - über das magnetische Feld - den Reed-Kontakt schaltet, sondern zwischen dem Magnet und dem Schalter wird zwangsläufig auch eine gewisse magnetische Haltekraft aufgebaut, welche den Schaltkörper bei einer Verschwenkung des Röhrchens in die andere Schaltstellung solange festhält, bis die Röhrchenneigung so groß ist, daß die den Schaltkörper zu verschieben suchende Komponente der Gewichtskraft des Schaltkörpers nicht nur den Reibungswiderstand, sondern auch die zusätzliche magnetische Haltekraft überwindet. Wenn der Schaltmagnet dagegen in der anderen, nicht durch einen seitlichen Reed-Magneten besetzten Endstellung steht, entfällt die magnetische Haltekraft dagegen, so daß der Schaltkörper sich also bereits bei geringerer Röhrchen-Neigung zu verschieben beginnt.

Die Anordnung des Reed- bzw. Schutzgas-Kontakts neben dem Führungs-Röhrchen bewirkt auch eine Abhängigkeit der Auslösepunkte von der auf den Röhrchen-Umfang bezogenen Lage des elektrischen Schalters. Die magnetische Haltekraft ist nämlich vom Abstand des zugehörigen Schaltkörpers vom elektrischen Schalter abhängig und somit - infolge des Spiels des Schaltkörpers im Röhrchen - bei unterschiedlicher, von der Komponente der Gewichtskraft abweichender Kraftrichtung der z.B. auf den Reed-Schalter einwirkenden Magnetkraft verschieden. Dabei kann es zu äußerst unterschiedlichen Kraftwirkungen kommen. Falls der Reed-Kontakt senkrecht über dem den magnetischen Schaltkörper führenden Röhrchen steht, wirkt die magnetische Haltekraft der Gewichtskraft - zumindest tendenziell - entgegen, d.h. das Gewicht des Schaltmagneten wird verringert, während sich bei Anordnung des Reed-Kontakts unterhalb des Röhrchens die Gewichtskraft und die magnetische Haltekraft addieren. Die unterschiedlichen Auslösewinkel für die obere und untere Schaltstellung werden also auch von der Lage des Kontaktschalters in bezug auf den Endbereich des Führungs-Röhrchens bestimmt. Diese Abhängigkeit des Schaltpunkts bzw. des Schaltwinkels von der Lage des magnetisch geschalteten Kontakts neben dem Röhrchen ist besonders deshalb unerwünscht, weil bei vielen als Neigungsschaltern ausgebildeten Lageschaltern der Schwimmkörper nicht ein einer exakt definierten Dreh-Stellung am Schwenkarm geführt ist. So ist es beispielsweise bei Ausbildung des Schwenkarms in der geschilderten Weise als biegsames Gummi- oder Kunststoff-Kabel denkbar, daß sich die Drehlage des Schwimmkörpers ändert, selbst wenn bei der Montage des Schwimmkörpers eine vorbestimmte Ausrichtung des Reed-Kontakts in bezug auf das Führungs-Röhrchen vorgeschrieben und eingehalten ist.

Der Erfindung liegt demgegenüber die Aufgabe zugrunde, den bekannten Lageschalter so weiterzubilden, daß eine genauere und gleichmäßigere Lage der Auslösepunkte in den beiden Endstellungen gegeben ist, wobei zusätzlich auch eine Erhöhung der Schaltsicherheit und/oder die Erzeugung unabhängiger Schaltsignale in den Endstellungen erreicht werden soll.

Ausgehend von einem Lageschalter der eingangs erwähnten Art wird diese Aufgabe erfindungsgemäß dadurch gelöst, daß in dem der anderen Endstellung des Schaltkörpers zugeordneten zweiten Endbereich des Röhrchens wenigstens ein ferromagnetisches Bauelement vorgesehen ist, dessen Lage am Röhrchen und/oder dessen Masse so gewählt ist, daß die zwischen dem in der zugeordneten Endstellung stehenden permanentmagnetischen Schaltkörper und dem ferromagnetischen Bauelement wirkende magnetische Haltekraft im wesentlichen gleich der zwischen dem elektrischen Schalter und dem in der zugeordneten Endstellung stehenden permanentmagnetischen Schaltkörper wirkenden magnetischen Haltekraft ist. Somit wird also auch in der zweiten Endstellung eine magnetische Haltekraft zwischen dem Schaltkörper und dem dort vorgesehenen ferromagnetischen Bauelement, beispielsweise einem Plättchen aus Weicheisen, erzeugt, wobei durch entsprechende Bemessung der Masse und Anordnung des Plättchens die magnetische Haltekraft so abgestimmt werden kann, daß sie der magnetischen Haltekraft in der eigentlichen Schaltstellung entspricht.

Um die Auswirkungen der seitlichen Versetzung des elektrischen Schalters und/oder des ferromagnetischen Bauelements auf die magnetische Haltekraft auszuschließen, kann es zweckmäßig sein, den elektrischen Schalter jeweils unmittelbar vor den zugeordneten stirnseitigen Abschlußwänden des den Schaltkörper längsbeweglich aufnehmenden Röhrchen anzuordnen, so daß also der elektrische Schalter und das elektromagnetische Bauelement fluchtend zur Längsmittelachse des Röhrchens und somit des Schaltkörpers angeordnet sind. Die Auslöseempfindlichkeit der als elektrische Schalter verwendeten Reed- bzw. Schutzgas-Kontakte ist dabei hinreichend groß, um - bei Verwendung eines entsprechend starken Schaltmagneten - auch in dieser Lage sicher geschaltet zu werden.

Das im zweiten Endbereich des Röhrchens vorzusehende ferromagnetische Bauelement kann nicht nur in der bereits erwähnten Weise als Körper aus ferromagnetischem Material, beispielsweise als Weicheisen-Plättchen, ausgebildet sein, sondern in vielen Fällen ist es sogar von Vorteil, wenn statt dessen ein dem im ersten Endbereich des Röhrchens angeordneten elektrischen Schalter entsprechender zweiter elektrischer Schalter im zweiten Endbereich des Röhrchens vorgesehen wird. Wenn dieser in bezug auf das Röhrchen in gleicher Ausrichtung wie der erste elektrische Schalter angeordnet wird, und die beiden Schalter baugleich sind, ist einerseits sichergestellt, daß die magnetischen Haltekräfte in den beiden Endstellungen gleiche Größe haben. Darüber hinaus kann aber dem zweiten elektrischen Schalter auch eine Schaltaufgabe zugeordnet werden, wobei verschiedene Schaltungen denkbar sind. So können den beiden Schaltern unterschiedliche elektrische Schaltkreise zugeordnet sein, wodurch der Lageschalter also unabhängige Schalt- oder Steuersignale in der unteren und oberen Schaltstellung entwickeln kann. Alternativ können die beiden elektrischen Schalter auch zum Aufbau eines Schaltkreises in Hintereinanderschaltung oder Parallelschaltung eingesetzt werden. Der eine elektrische Schalter kann dann beispielsweise von einem als "Öffner" und der andere als "Schließer" ausgebildeten Reed-Kontakt gebildet werden.Durch geeignete Zusammenschaltung von zwei Schaltern kann auch die Funktion eines Wechselschalters oder "Wechslers" verwirklicht werden, ohne daß spezielle Wechselschalter eingesetzt werden müssten, obwohl auch Lageschalter der erfindungsgemäßen Ausgestalltung unter Verwendung solcher spezieeller Wechselschalter aufbaubar sind.

Wenn der bzw. die elektrische(n) Schalter und/oder das ferromagnetische Bauelement jeweils seitlich neben dem Röhrchen in dessen zugeordnetem Endbereich angeordnet sind, was gegenüber der oben erwähnten stirnseitigen Anordnung den Vorteil einer vergleichsweise höheren magnetischen Schaltkraft des Schaltkörpers hat, da der Schaltkörper in der zugeordneten Schaltstellung näher am elektrischen Schalter liegt, ist es von Vorteil, wenn der erste elektrische Schalter und das ferromagnetische Bauelement bzw. der zweite elektrische Schalter in bezug auf die Längsmittelachse des Röhrchens jeweils in gleiche Richtung versetzt neben dem Röhrchen angeordnet sind. Damit wird ausgeschlossen, daß sich die magnetischen Haltekräfte in den Endstellungen und die den Schaltkörper zu verschieben suchenden Komponenten der Gewichtskraft in unterschiedlicher Weise addieren bzw. subtrahieren.

Darüber hinaus kann es aber auch zweckmäßig sein, in jedem der beiden Endbereiche des Röhrchens jeweils wenigstens zwei elektrische Schalter oder - in einem Endbereich - ferromagnetische Bauelemente vorzusehen, welche rechtwinklig zur Längsmittelachse des Röhrchens in gleichmäßigen Winkelabständen versetzt in jeweils gleichem Abstand zur Längsmittelachse angeordnet sind. Dadurch wird der Schaltpunkt unabhängig von der Einbau-Drehlage des Röhrchens und darüber hinaus kann jeder der in jeweils einer Endlage vorgesehenen Schalter zur Entwicklung eines unabhängigen Schaltsignals für unterschiedliche Schaltkreise verwendet werden, oder durch Parallelschaltung der beiden Schalter kann wieder die Schaltsicherheit erhöht werden.

In der Praxis wird es in vielen Fällen genügen, wenn in jedem der beiden Endbereiche zwei elektrische Schalter oder - in einem Endbereich - ferromagnetische Bauelemente in in bezug auf die Längsmittelachse des Röhrchens diametral gegenüberliegende Anordnung vorgesehen werden.

Die Erfindung ist in der folgenden Beschreibung mehrerer Ausführungsbeispiele in Verbindung mit der Zeichnung näher erläutert, und zwar zeigt:
- Fig. 1: eine teilweise geschnittene Seitenansicht der für die Schaltfunktion eines bekannten, als Schwimmerschalter vorgesehenen Lageschalters wesentlichen Bauteile, nämlich eines an seinen beiden Enden hermetisch geschlossenen länglichen Röhrchens aus unmagnetischem Material, in welchem ein Permanentmagnet als Schaltkörper für einen im Endbereich des Röhrchens angeordneten, als Reed-Kontakt ausgebildeten elektrischen Schalter vorgesehen ist;
- Fig. 2: eine teilweise geschnittene Seitenansicht der für die Schaltfunktion wesentlichen Bauteile eines ersten Ausführungsbeispiels eines erfindungsgemäßen Lageschalters;
- Fig. 3: eine teilweise geschnittene Seitenansicht eines gegenüber Figur 2 abgewandelten zweiten Ausführungsbeispiels des erfindungsgemäßen Lageschalters;
- Fig. 4: ein drittes Ausführungsbeispiel der für die Schaltfunktion wesentlichen Bauteile eines erfindungsgemäßen Lageschalters;
- Fig. 5: die teilweise geschnittene Seitenansicht der für die Schaltfunktion wesentlichen Teile eines gegenüber dem Ausführungsbeispiel gemäß Figur 4 weitergebildeten vierten Ausführungsbeispiels des erfindungsgemäßen Lageschalters;
- Fig. 6: eine teilweise geschnittene Seitenansicht eines weiter abgewandelten fünften Ausführungsbeispiels eines Lageschalters;
- Fig. 7: eine Ansicht eines gegenüber Figur 6 abgewandelten sechsten Ausführungsbeispiels; und
- Fig. 8: eine Schnittansicht durch die Schaltfunktions-Bauteile eines weiteren erfindungsgemäßen Lageschalters, wobei die Lage der Schnittebene durch die Pfeile 8-8 in Fig. 7 veranschaulicht sein möge.

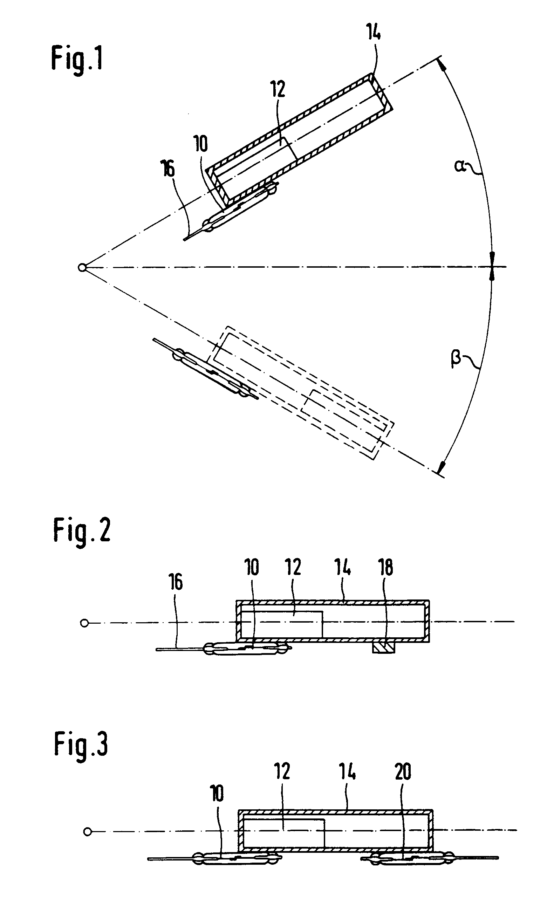

In Figur 1 sind die für die Schaltfunktionen wesentlichen Bauteile eines z.B. aus der DE-PS 34 35 847 bekannten, als Schwimmerschalter ausgebildeten Lageschalters dargestellt, und zwar umfassen diese Bauteile den eigentlichen, im speziellen Fall als Reed-Kontakt 10 oder Schutzgas-Kontakt ausgebildeten elektrischen Schalter, der durch einen permanentmagnetischen Schaltkörper 12 geschaltet wird. Der Schaltkörper 12 seinerseits ist in einem im dargestellten Fall an beiden Enden hermetisch dicht geschlossenen Röhrchen 14 aus unmagnetischem Material, beispielsweise einem Glasröhrchen verschieblich eingesetzt. Der Reed-Kontakt ist in einem Endbereich des Röhrchens 14 in seitlicher Anlage an dessen Mantelfläche so angeordnet, daß der Schalter aus seinem normalen Schaltzustand dann umgeschaltet wird, wenn der permanentmagnetische Schaltkörper 12 im zugeordneten Endbereich des Röhrchens 14 steht, sich dagegen wieder öffnet, wenn der Schaltkörper 12 aus dieser - in Figur 1 dargestellten - Lage zum gegenüberliegenden Ende des Röhrchens 14 verschiebt. D.h. je nach Ausbildung des Reed-Kontakts 10 als "Schließer" oder "Öffner" wird der Reed-Kontakt durch den Schaltkörper 12 geöffnet bzw. geschlossen und kann dann über die aus ihm herausgeführten elektrischen Anschlüsse 16 zur Ansteuerung einer elektrischen Schaltung dienen, welche - im Falle der Ausbildung des Lageschalters als Schwimmerschalter - beispielsweise den elektrischen Antriebsmotor einer Pumpe ein- oder ausschaltet.

Ersichtlich ist jedenfalls, daß der Schaltzustand des Reed-Kontakts 10 von der Lage des Schaltkörpers 12 im Röhrchen 14 abhängt, und die Lage dieses Schaltkörpers 12 seinerseits hängt wiederum von der Neigung des Röhrchens 14 ab. Im dargestellten Fall ist das Röhrchen 14 gegenüber der Horizontalen um den Winkel α geneigt, wodurch der Schaltkörper aufgrund seines Gewichts in die dem Reed-Schalter 10 benachbarte, d.h. ihn schaltende, Stellung gerutscht ist.

Zum Ausschalten muß das Röhrchen dann also in die entgegengesetzte Richtung geneigt werden, und zwar bis in die in Figur 1 strichpunktiert dargestellte Lage, in welcher das Röhrchen unter einem Winkel β zur Horizontalen geneigt ist. Aufgrund der magnetischen Haltewirkung zwischen dem Schaltkörper 12 und dem Reed-Kontakt 10 wird der Schaltkörper 12 mit einer - wenn auch geringen - Haltekraft gehalten. Das hat zur Folge, daß zur Verschiebung des Schaltkörpers 12 aus der dargestellten, den Schalter 10 schaltenden Stellung in die Freigabestellung nicht nur die Reibung zwischen dem Schaltkörper 12 und der Innenwandung des Röhrchens 14, sondern zusätzlich auch noch diese Haltekraft überwunden werden muß. Das hat zur Folge, daß der Absolutwert des Winkels β, um welchen das Röhrchen zur Schalterfreigabe geschwenkt werden muß, größer als der Winkel α ist.

Der genaue Aufbau eines in der beschriebenen Weise arbeitenden, als Schwimmerschalter ausgebildeten Lageschalters ist im einzelnen in der DE-PS 34 35 847 beschrieben, so daß weitere Erläuterungen hier entfallen können, wobei aber darauf hingewiesen wird, daß die beschriebene (bekannte) Anordnung - ebenso wie die nachfolgend beschriebenen, in der erfindungsgemäßen Weise weitergebildeten Ausgestaltungen - nicht nur für Schwimmerschalter, sondern ganz allgemein für solche Schalter geeignet sind, bei welchen die zu überwachende Schaltgröße direkt oder indirekt in eine Verschwenkung des Röhrchens 14 umgesetzt werden kann.

Figur 2 zeigt eine Weiterbildung des vorstehend beschriebenen (bekannten) Schalters, bei welchem lediglich im zweiten Endbereich des Röhrchens auf dessen Außenfläche ein ferromagnetisches Bauelement in Form eines kleinen Weicheisen-Plättchens 18 aufgeklebt oder in anderer Weise befestigt ist, wobei die Masse und Lage des Weicheisen-Plättchens 18 so gewählt ist, daß die zwischen dem Schaltkörper 12 und dem Weicheisen-Plättchen 18 wirkende magnetische Haltekraft im wesentlichen gleich der zwischen dem Reed-Kontakt 10 und dem Schaltkörper 12 wirkenden magnetischen Haltekraft ist. Es ist ersichtlich, daß hierdurch erreicht werden kann, daß auch der in Verbindung mit Figur 1 geschilderte Winkel β ungefähr gleich dem Winkel α wird.

Bei dem in Figur 3 gezeigten Ausführungsbeispiel wird die gleiche Wirkung dadurch erreicht, daß anstelle des Weicheisen-Plättchens 18 ein zweiter, dem Reed-Kontakt 10 entsprechender Reed-Kontakt 20 in Ausrichtung zum Reed-Kontakt 10 am anderen Endbereich vorgesehen wird. Neben der dann zwangsläufig gleichen Haltekraft des Schaltkörpers 12 in den beiden Auslösestellungen hat diese Ausgestaltung den Vorteil, daß der Reed-Kontakt 20 natürlich auch elektrische Schaltfunktionen übernehmen kann, d.h. in geeigneter Weise in die Steuerschaltung des Reed-Kontakts 10 eingeschlossen oder auch zur Schaltung einer weiteren unabhängigen Steuerschaltung ausgenutzt werden kann.

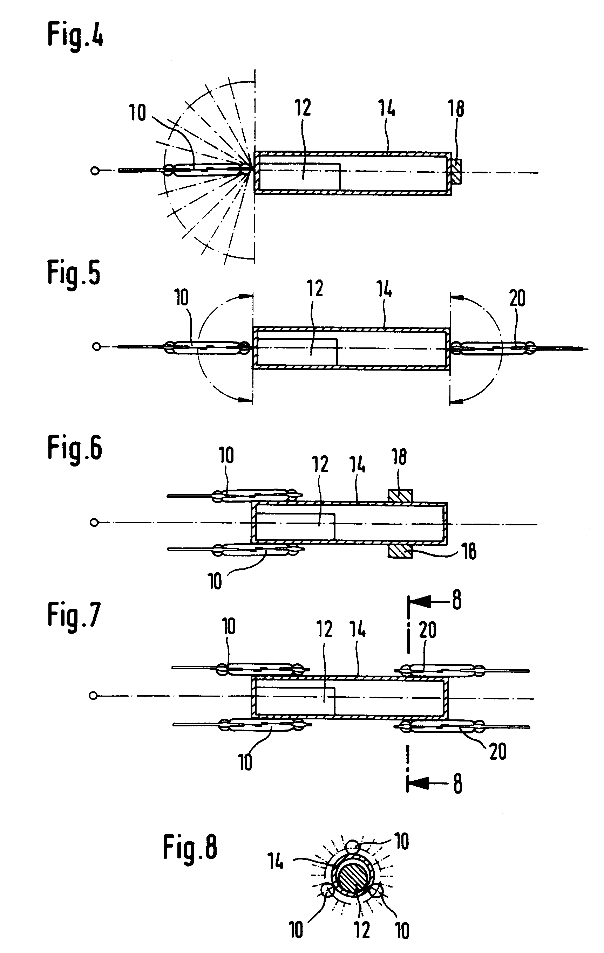

Figur 4 zeigt ein Ausführungsbeispiel, welches funktionell dem in Verbindung mit Figur 2 beschriebenen Ausführungsbeispiel entspricht, wobei jedoch der Reed-Kontakt 10 einerseits und das Weicheisen-Plättchen 18 andererseits nicht an der Mantelwandung des Röhrchens 14, sondern jeweils an den Stirnwänden, und zwar im dargestellten Fall in fluchtender Ausrichtung zur Längsmittelachse des Röhrchens 14 angeordnet sind. Dadurch wird die zwischen dem Schaltkörper 12 und dem Reed-Kontakt 10 einerseits bzw. dem Weicheisen-Plättchen 18 andererseits in der jeweils zugeordneten Stellung aufgebaute magnetische Haltekraft nicht nur gleich, sondern ihre Größe wird auch unabhängig davon, ob Reed-Kontakt 10 und Weicheisen-Plättchen 18 in der in Figur 2 gezeigten Lage auf der unteren Mantellinie oder einer hierzu in Umfangsrichtung versetzten Mantellinie angeordnet sind. Da magnetische Kraftwirkung unter anderem auch vom Abstand der sich beeinflussenden Elemente abhängig sind, kann sich nämlich infolge des zwangsläufig erforderlichen Spiels zwischen dem Schaltkörper 12 und der Innenwandung des Röhrchens 14 die magnetische Haltekraft ändern, wenn der Schalter 10 und/oder das Plättchen 18 an in Umfangsrichtung versetzten unterschiedlichen Stellen der Mantelwandung angeordnet wird, weil der Schaltkörper durch sein Gewicht in jedem Falle auf der tiefsten Mantellinie im Röhrchen aufsitzt.

Der mit fluchtend zur Längsmittelachse des Röhrchens 14 ausgerichtete Achse vor der Stirnwand des Röhrchens angeordnet dargestellte Reed-Kontakt 10 kann auch in in bezug auf die Röhrchen-Achse unterschiedlich geneigten Stellungen angeordnet werden, was in der Zeichnungsfigur durch eine Anzahl von unter unterschiedlichen Winkeln verlaufenden strichpunktierten Linien angedeutet ist, welche die mögliche Lage der Längsmittelachse des Reed-Kontakts 10 veranschaulichen.

Das in Figur 5 gezeigte Ausführungsbeispiel stellt wiederum eine Weiterbildung des Ausführungsbeispiels gemäß Figur 4 dar, wobei das Weicheisen-Plättchen 18 wiederum durch einen zweiten elektrischen Schalter, d.h. den Reed-Kontakt 20, ersetzt ist. Bezüglich der Vorteile der Verwendung eines zweiten elektrischen Schalters gilt dann wieder das bereits zum Auführungsbeispiel gemäß Figur 3 Ausgeführte.

Auch hier können die Reed-Kontakte 10, 20 - abweichend von der dargestellten, zur Röhrchen-Längsmittelachse fluchtenden Ausrichtung - unter einem Winkel angeordnet sein.

In den Figuren 6 und 7 sind schließlich noch weitere Ausführungsbeispiele dargestellt, bei denen in jedem der beiden Endbereiche jeweils wenigstens zwei oder auch (gemäß Figur 8) mehr Reed-Schalter 10, 20 bzw. Weicheisen-Plättchen 18 in den Endbereichen des Röhrchens 14 angeordnet sind, wobei wesentlich ist, daß die Anordnung am Röhrchen so erfolgt, daß die Schalter bzw. Weicheisen-Plättchen in Umfangsrichtung gesehen in gleichmäßigen Winkelabständen voneinander stehen. Dann werden nämlich die zwischen Schaltkörper und den elektrischen Schaltern bzw. den ferromagnetischen Plättchen wirkenden Haltekräfte - unabhängig von der Einbau-Drehlage des Röhrchens - in jedem Falle gleich.

Die Verwendung von zwei (oder mehr) einer Schaltstellung zugeordneten elektrischen Schaltern ermöglicht die Verwendung in komplexen elektrischen Schaltungen, wobei diese Schaltungen so getroffen sein können, daß entweder der Aspekt der möglichst zuverlässigen Schaltung berücksichtigt wird, oder es ist wiederum möglich, unabhängige Schaltkreise durch die gesonderten elektrischen Schalter anzusteuern.

Es ist ersichtlich, daß im Rahmen des Erfindungsgedankens wie in dem Ansprüchen definiert Abwandlungen und Weiterbildungen der beschriebenen Ausführungsbeispiele verwirklichbar sind. Die Reed-Schalter oder Schutzgaskontakte am Röhrchen und ihre genaue Positionierung kann - wie schon bei der Beschreibung der Figuren 4 und 5 erwähnt - auch abweichend von den in Verbindung mit den beschriebenen Ausführungsbeispielen herausgestellten Lage erfolgen, solange sichergestellt ist, daß der Schaltkörper bei Annäherung an den zugeordneten Schalter mit hinreichender Sicherheit umschaltet. Anstelle einer Fixierung der elektrischen Schalter und/oder der ferromagnetischen Bauelemente am Röhrchen, kann die Ausgestaltung so getroffen sein, daß die Bauelemente in bezug auf ihre Lage am Röhrchen veränderbar sind.

Anstelle des in den beschriebenen Ausführungsbeispielen verwendeten und in den Zeichnungsfiguren dargestellten, durch Verschmelzung hermetisch abgedichteten Glasröhrchens 14 können zur Aufnahme und Führung des Schaltkörpers auch Röhrchen aus geeigneten, d.h. reibungsarmen anderen Materialien, verwendet werden, die auch nicht unbedingt hermetisch dicht verschlossen sein müssen, sofern sichergestellt ist, daß die Schaltkörper-Endlagen exakt erreicht werden und keine Korrosionsgefahr für den Schaltkörper besteht.Anstelle der bei den beschriebenen Ausführungsbeispielen verwendeten Reed-Schalter können auch andere Schalter, beispielsweise sogenannte Hall-Schalter zum Aufbau der erfindungsgemäßen Lageschalter verwendet werden. Voraussetzung ist lediglich, daß der verwendete elektrische Schalter durch die Wirkung magnetischer Felder von einem in einen anderen Schaltzustand veränderbar ist.

## Patentansprüche

1. Lageschalter mit einem in einem Röhrchen (14) aus unmagnetischem Material zwischen zwei Endstellungen längsbeweglich angeordneten, permanentmagnetischen Schaltkörper (12), welchem in einem der einen Endstellung des Schaltkörpers zugeordneten ersten Endbereich des Röhrchens ein vorzugsweise als Reed- oder Schutzgas-Kontakt ausgebildeter elektrischer Schalter (10) zugeordnet ist, der bei Annäherung des Schaltkörpers an den ersten Endbereich durch das magnetische Feld des Schaltkörpers geschaltet wird, wobei das Röhrchen im Lageschalter so angeordnet ist, daß eine Änderung der zu überwachenden Lage in eine Neigung des Röhrchens relativ zur Horizontalen umgesetzt wird,
**dadurch gekennzeichnet,**
daß in dem der anderen Endstellung des Schaltkörpers (12) zugeordneten zweiten Endbereich des Röhrchens (14) wenigstens ein ferromagnetisches Bauelement (18; 20) vorgesehen ist, dessen Lage am Röhrchen (14) und/oder dessen Masse so gewählt ist, daß die zwischen dem in der zugeordneten Endstellung stehenden permanentmagnetischen Schaltkörper (12) und dem ferromagnetischen Bauelement (18; 20) wirkende magnetische Haltekraft im wesentlichen gleich der zwischen dem elektrischen Schalter (10) und dem in der zugeordneten Endstellung stehenden permanentmagnetischen Schaltkörper (12) wirkenden magnetische Haltekraft ist.

2. Lageschalter nach Anspruch 1, dadurch gekennzeichnet, daß der elektrische Schalter (10) und das ferromagnetische Bauelement (18; 20) jeweils unmittelbar vor den zugeordneten stirnseitigen Abschlußwänden des den Schaltkörper (12) längsbeweglich aufnehmenden Röhrchens (14) angeordnet sind.

3. Lageschalter nach Anspruch 1 oder 2, dadurch gekennzeichnet, daß das im zweiten Endbereich vorgesehene ferromagnetische Bauelement (18) von einem Körper aus ferromagnetischem Material, vorzugsweise Weicheisen, gebildet wird.

4. Lageschalter nach einem der Ansprüche 1 bis 3, dadurch gekennzeichnet, daß das im zweiten Endbereich des Röhrchens (14) vorgesehene ferromagnetische Bauelement Teil eines zweiten, dem im ersten Endbereich des Röhrchens (14) angeordneten elektrischen Schalter (10) entsprechenden elektrischen Schalters (20) ist.

5. Lageschalter nach einem der Ansprüche 1 bis 4, dadurch gekennzeichnet, daß der bzw. die elektrische(n) Schalter (10; 20) und/oder das ferromagnetische Bauelement (18) jeweils seitlich neben dem Röhrchen in dessen zugeordnetem Endbereich angeordnet sind.

6. Lageschalter nach Anspruch 5, dadurch gekennzeichnet, daß der erste elektrische Schalter (10) und das ferromagnetische Bauelement (18) bzw. der zweite elektrische Schalter (20) in bezug auf die Längsmittelachse des Röhrchens (14) jeweils in gleiche Richtung versetzt neben dem Röhrchen (14) angeordnet sind.

7. Lageschalter nach Anspruch 5 oder 6, dadurch gekennzeichnet, daß in jedem der beiden Endbereiche des Röhrchens (14) jeweils wenigstens zwei elektrische Schalter (10; 20) oder - in einem Endbereich - ferromagnetische Bauelemente (18) vorgesehen sind, welche rechtwinklig zur Längsmittelachse des Röhrchens (14) in gleichmäßigen Winkelabständen versetzt in jeweils gleichem Abstand zur Längsmittelachse angeordnet sind.

8. Lageschalter nach Anspruch 7, dadurch gekennzeichnet, daß in jedem der beiden Endbereiche zwei elektrische Schalter (10; 20) oder - in einem Endbereich - ferromagnetische Bauelemente (18) in bezug auf die Längsmittelachse des Röhrchens (14) diametral gegenüberliegender Anordnung vorgesehen sind.

## Claims

1. Position switch with a permanent magnetic switching body (12) which is arranged in a tube (14) of non-magnetic material so as to be longitudinally movable between two end positions and associated with which in a first end region of the tube associated with one end position of the switching body there is an electrical switch (10), which is preferably constructed as a Reed or protective gas contact and which is switched by the magnetic field of the switching body when the switching body approaches the first end region, whereby the tube is so arranged in the position switch that a change of the position to be monitored is converted into an inclination of the tube relative to the horizontal, characterised in that provided in the second end region of the tube (14) associated with the other end position of the switching body (12) there is at least one ferromagnetic element (18;20), the position of which on the tube (14) and/or the mass of which is so selected that the magnetic retaining force, which act between the permanent magnetic switching body (12) situated in the associated end position and the ferromagnetic element (18;20) is substantially equal to the magnetic retaining force which acts between the electrical switch (10) and the permanent magnetic switching body (12) situated in the associated end position.

2. Position switch as claimed in claim 1, characterised in that the electrical switch (10) and the ferromagnetic element (18;20) are each arranged directly in front of the associated end walls of the tube (14) which longitudinally movably accommodates the switching body (12).

3. Position switch as claimed in claim 1 or 2, characterised in that the ferromagnetic element (18) provided in the second end region is constituted by a body of ferromagnetic material, preferably soft iron.

4. Position switch as claimed in one of claims 1 to 3, characterised in that the ferromagnetic element provided in the second end region of the tube (14) is a part of a second electrical switch (20) corresponding to the electrical switch (10) which is arranged in the first end region of the tube (14).

5. Position switch as claimed in one of claims 1 to 4, characterised in that the electrical switch(es) (10;20) and/or the ferromagnetic element (18) are each arranged laterally adjacent the tube in its associated end region.

6. Position switch as claimed in claim 5, characterised in that the first electrical switch (10) and the ferromagnetic element (18) or the second electrical switch (20) are each arranged adjacent the tube (14) offset in the same direction with respect to the longitudinal central axis of the tube (14).

7. Position switch as claimed in claim 5 or 6, characterised in that provided in each of the two end regions of the tube (14) there are at least two electrical switches (10;20) or - in one end region - ferromagnetic elements (18), which are arranged offset at right angles to the central longitudinal axis of the tube (14) at uniform angular spacings and at the same spacing from the central longitudinal axis.

8. Position switch as claimed in claim 7, characterised in that provided in each of the two end regions there are two electrical switches (10;20) or - in one end region - ferromagnetic elements (18) in a diametrically opposed arrangement with respect to the central longitudinal axis of the tube (14).

## Revendications

1. Interrupteur de position, avec un corps de commutation (12) à magnétisme permanent, disposé déplaçable longitudinalement, entre deux positions d'extrémité, dans un petit tube (14) en matériau non magnétique, corps de commutation auquel est associé, dans une première zone d'extrémité du petit tube, associée à l'une des positions d'extrémité du corps de commutation, un interrupteur électrique (10) réalisé de préférence sous forme de contact Reed ou de contact à gaz de protection, et qui est commuté, lors de l'approche du corps de commutation de la première zone d'extrémité, par le champ magnétique du corps de commutation, le petit tube étant disposé dans l'interrupteur de position de manière qu'une modification de la position à surveiller soit convertie en une inclinaison du petit tube par rapport à l'horizontale,
caractérisé en ce que, dans la deuxième zone d'extrémité, du petit tube (14) associée à l'autre position d'extrémité du corps de commutation (12) est prévu au moins un élément de construction (18; 20) ferromagnétique, dont la position sur le petit tube (14) et/ou sa masse est choisie telle que la force de maintien magnétique agissant entre le corps de commutation (12) à magnétisme permanent placé dans la position d'extrémité associée et l'élément de construction (18 20) ferromagnétique est sensiblement égale à la force de maintien magnétique agissant entre l'interrupteur électrique (10) et le corps de commutation (12) à magnétisme permanent se trouvant dans la position d'extrémité associée.

2. Interrupteur de position selon la revendication 1, caractérisé en ce que l'interrupteur électrique (10) et l'élément de construction (18 ; 20) ferromagnétique sont chacun disposés directement devant les parois de délimitation frontales associées du petit tube (14) logeant mobile longitudinalement le corps de commutation (12).

3. Interrupteur de position selon la revendication 1 ou 2, caractérisé en ce que l'élément de construction (18) ferromagnétique prévu dans la deuxième zone d'extrémité est constitué par un corps en matériau ferromagnétique, de préférence en fer doux.

4. Interrupteur de position selon l'une des revendications 1 à 3, caractérisé en ce que l'élément de construction ferromagnétique prévu dans la deuxième zone d'extrémité du petit tube (14) est un deuxième commutateur électrique (20) correspondant à l'interrupteur électrique (10) disposé dans la première zone d'extrémité du petit tube (14).

5. Interrupteur de position selon l'une des revendications 1 à 4, caractérisé en ce que le ou les interrupteur(s) électrique(s) (10 ; 20) et/ou l'élément de construction ferromagnétique (18) sont disposés chacun latéralement à côté du petit tube, dans sa zone d'extrémité associée.

6. Interrupteur de position selon la revendication 5, caractérisé en ce que le premier interrupteur électrique (10) et l'élément de construction ferromagnétique (18), ou le deuxième commutateur électrique (20) sont disposés chacun dans la même direction, décalés à côté du petit tube (14) par rapport à l'axe longitudinal médian de ce petit tube (14).

7. Interrupteur de position selon la revendication 5 ou 6, caractérisé en ce que, dans chacune des deux zones d'extrémité du petit tube (14), sont prévus au moins deux commutateurs électriques (10 ; 20) ou - dans une zone d'extrémité - des éléments de construction ferromagnétiques (18), qui sont disposés à angle droit par rapport à l'axe longitudinal médian du petit tube (14), décalés d'espacement angulaire régulier, chaque fois avec le même espacement par rapport à l'axe longitudinale médian.

8. Interrupteur de position selon la revendication 7, caractérisé en ce que, dans chacune des deux zones d'extrémité, sont prévus deux commutateurs électriques (10 20) ou - dans une zone d'extrémité - des éléments de construction ferromagnétiques (18), en disposition diamétralement opposée par rapport à l'axe longitudinal médian du petit tube (14).
